# EUROPÄISCHE PATENTANMELDUNG

(11) **EP 1 648 048 A2**
(43) Veröffentlichungstag der Anmeldung: **19.04.2006**
(21) Anmeldenummer: 05405470.5
(22) Anmeldetag: 11.08.2005
(51) Int. Cl.: H01M 10/48, G01R 31/36, H02J 7/00

(54) **Verfahren zum Optimieren der Lebensdauer von Traktionsbatterien**

(30) Priorität: 13.08.2004 CH 20041339
(71) Anmelder: Ing. Büro M. Kyburz AG, 8427 Freienstein (CH)
(72) Erfinder: Kyburz, Martin, CH-8428 Freienstein-Teufen (CH); Loacker, Frank, CH-8427 Freienstein (CH)
(74) Vertreter: Schneider Feldmann AG Patent- und Markenanwälte

(57) **Zusammenfassung**

Es wird ein Verfahren zur Optimierung der Lebensdauer von Blei-Säure Akkus vorgeschlagen, welches insbesondere bei Akkus, welche im Traktionsbetrieb, im stationären Betrieb oder als Starterbatterien Verwendung finden, eingesetzt sind, entscheidende Vorteile bringt. Mit verschiedenen Massnahmen kann die Zyklenfestigkeit und dadurch die nutzbare Lebensdauer von Batterien, vorzugsweise Bleibatterien verlängert werden. Verschiedene Daten des Akkus werden detektiert und an ein Ladegerät übermittelt. Auf Grund dieser Daten wird dann die geeignete Ladekurve gewählt. Mit Hilfe geeigneter Algorithmen kann aus den gespeicherten und oder gemessenen Daten auf den Ladezustand (SOC), die noch verbleibende Kapazität oder Lebensdauer der Batterie (SOH) zurückgeschlossen werden.

## Beschreibung

Die Erfindung betrifft ein Verfahren zum Optimieren der Lebensdauer von Batterien, insbesondere für Traktionszwecke, Notstromversorgungen, Pufferbatterien oder Starterbatterien von Motoren, nach dem Oberbegriff des unabhängigen Patentanspruches.

Batterien, auch Akkumulatoren genannt, sind heute weit verbreitet. Diverse Typen kommen in einer grossen Zahl von verschiedenen Anwendungen zum Einsatz.

Traktions- Blei - Gel und Blei - Säure Batterien, auch Batterien genannt, erreichen heute im Labor unter definierten Bedingungen üblicherweise zwischen 200 ... 500 volle Lade- und Entladezyklen (80% Entladung). Jedoch werden in der Praxis in den überwiegenden Fällen wesentlich weniger Zyklen erreicht, typischerweise zwischen 30 ... 60 volle Entladezyklen, bis die Batterie aufgrund zu niedriger Kapazität erneuert werden muss. Weiter ist es für den Kunden, der die Batterie einsetzt, oft nur sehr schwer und nur nach aufwändigen Tests möglich, den Zustand der Batterie und ihre Funktionstüchtigkeit zu erfassen. Ein weiterer Nachteil ist heute, dass es sehr oft nicht möglich ist, bei einer im Einsatz stehenden Batterie festzustellen, ob diese vom Benützer korrekt geladen und entladen wird. Immerhin führen Abweichungen von der für den Batterietypen vorgeschriebenen Ladekennlinie unweigerlich zum frühzeitigen Ausfall der Batterie.

Für Traktionszwecke werden oft mehrere Batterien in einem Batteriepaket zusammengefasst. Sie werden in Serie, parallel oder serie-parallel geschaltet.

US 4,670,703 beschreibt ein Ladegerät, das mit vier verschiedenen Ladearten arbeitet. Die Ladeart wird gewählt, abhängig von der Kapazität, der Umgebungstemperatur, der Zelltemperatur und der erreichten Spannung des Akkus. Auch EP 510015 beschreibt ein ähnliches Ladegerät.

CH 612'300 zeigt, wie die Begrenzung des Ladevorgangs gesteuert wird. Dazu wird eine Differenzmessung der anliegenden Spannung in Zeitintervallen durchgeführt.

Nach EP 493'226 wird Spannung, Strom und Zeit gemessen. Die Daten werden in einem Datenspeicher gespeichert. Daraus werden Differenzspannung und Differenzkapazität errechnet. Nach dem Erkennen des Batteriezustands wird eine entsprechende Ladekurve gewählt.

Nach EP 623'985 wird die Zelltemperatur gemessen und eine entsprechende Ladekurve zum Laden selektiert. Das beschriebene Verfahren ist speziell für NiCd und NiMH Batterien geeignet.

EP 793'327 befasst sich mit dem Steuern der Ladung von Traktionsbatterien. Unterschiedliche Batterietypen werden erkannt, eine Spannungsdifferenzmessung wird durchgeführt. Die Messwerte werden gespeichert und eine geeignete Ladekurve gewählt.

US 4,455,523 befasst sich mit dem Laden von NiCd Akkus. Lebensdauer und Zuverlässigkeit des Akkus sollen optimiert werden. Einzelne Batterieparameter werden gespeichert. Ladevorgänge werden so gestaltet, dass auch Tiefentladungen durchgeführt werden können, um die Leistung der Batterien zu erhalten. Eine Geschichte des Batteriepacks kann in einem flüchtigen Speicher aufgezeichnet werden. Ein Rechner sorgt für die Kommunikation zwischen dem flüchtigen Speicher und dem Ladegerät. Das beschriebene Verfahren ist für Blei-Akkus nicht geeignet.

Aus US 5,808,445 ist ein Energiemanagement-System für Blei-Säure Akkus für Traktionszwecke bekannt. Es wird die Geschichte des Gebrauchs der Batterie benützt, um eine Aussage für den momentanen Ladezustand zu errechnen. Dazu wird mit einer coulometrischen (Stromstärke und Elektrolysedauer) Aufsummierung während dem Entladen und Laden gearbeitet. Die Batterie wird erkannt durch Speichern historischer Funktionsdaten in einem Computerspeicher. Aus diesen gespeicherten Daten wird ein Anpassungsfaktor für den aktuellen Ladevorgang errechnet.

Alle diese bekannten Ladegeräte und Ladeverfahren für Akkus sind entweder für Blei-Säure Batterien ungeeignet oder sie arbeiten nur in Abhängigkeit vom Ladezustand und der anliegenden Spannung des Akkus. Dadurch verlieren aber Blei-Säure Akkus laufend an Kapazität, auch wenn sie scheinbar voll geladen werden. Im echten Einsatz, ganz besonders im Traktionsbetrieb, können weitere Eigenschaften und Informationen und deren Berücksichtigung zur Optimierung der Lebensdauer solcher Akkus oder zur Erkennung des gegenwärtigen Zustandes führen.

Es ist heute nicht möglich, ohne aufwändige Tests den momentanen Energieinhalt, die noch zur Verfügung stehende Energiespeicherfähigkeit, den funktionellen Zustand und die noch verbleibende Lebensdauer der Batterie abzuschätzen oder zu messen. Auch ist es heute ohne sehr aufwändige Tests nicht möglich zu beurteilen, ob ein Anwender die Batterie korrekt behandelt hat, und es ist nicht möglich, zu erkennen, wie viele Zyklen er der Batterie bereits abverlangt hat. Heute ist es bei Reihenschaltung von Batterien, für ein an diese angeschlossenes Ladegerät nicht möglich, den Ladezustand oder aber die Spannungslage der einzelnen Zellen zu detektieren. Ist diese unterschiedlich, so kommt es vor, dass das Ladegerät einen viel zu hohen Strom einstellt, wodurch die Zelle mit zu hoher Spannungslage in kurzer Zeit zerstört wird, was zum vorzeitigen Ausfall der Batterien führt.

Aufgabe der Erfindung ist es, ein Verfahren zur Optimierung der Lebensdauer von Blei-Säure Akkus anzugeben, welches insbesondere bei Akkus, die im Traktionsbetrieb oder im stationären Betrieb als Energiepuffer zum Beispiel einer Notstromversorgung oder einer Starterbatterie eingesetzt sind, entscheidende Vorteile bringt. Dies sind Massnahmen, die die Zyklenfestigkeit und dadurch die nutzbare Lebensdauer von Batterien, vorzugsweise Bleibatterien, verlängern.

Diese Aufgabe wird durch die Erfindung gemäss unabhängigen Patentansprüchen gelöst.

Die Erfindung wird nachstehend im Zusammenhang mit den Zeichnungen beschrieben. Es zeigen:
Das neue Verfahren beschreibt Massnahmen, die einzeln oder in Kombination die nutzbare Lebensdauer der Batterie entscheidend verlängern, dem Anwender Rückschlüsse auf korrekte Handhabung bieten und die noch vorhandene Leistungsfähigkeit und/oder die noch vorhandene verbleibende nutzbare Lebensdauer der Batterie erfasst und/oder aufzeichnet. Weiter kann auch zumindest der ungefähre Ladezustand und die noch verfügbare Restkapazität in kurzer Zeit ausgelesen werden.

Weiter werden durch diese Massnahmen dem Hersteller, dem Händler und/oder dem Kunden jederzeit Mittel an die Hand gegeben, um den Ladezustand ("State of Charge", abgekürzt SOC), die schon aufgenommene und abgegebene Energie, die Qualität der bis zum Auslesedatum der Batterie zugefügten Behandlung und die mutmassliche oder/und tatsächliche noch zu erwartete zeitliche und/oder zyklenbehaftete Nutzungsdauer ("State of Health", abgekürzt SOH) zu erkennen.

Ein weiterer Grundgedanke der Erfindung besteht darin, die Ladevorgänge nicht nur an den momentanen Zustand der Akkus anzupassen, sondern an den tatsächlichen Gebrauch. Ein Ladevorgang soll den vorangegangenen Entladevorgang in bezug auf Stromstärke und Zeitdauer berücksichtigen. Das heisst, dass die Art und Dauer der letzten Entladung im Besonderen aber auch die ganze Geschichte der vorangegangen Entlade-, und Ladevorgänge für die Steuerung jedes Ladevorganges berücksichtigt werden.

Bestandteil der Erfindung ist auch, dass dem Anwender der Batterie jederzeit korrekte oder unkorrekte Handhabung nachgewiesen werden können, um sowohl Garantieansprüche gegenüber dem Hersteller eindeutig regeln zu können, als auch dem Anwender eindeutige Hinweise auf den korrekten Einsatz und/oder lebenserhaltende oder verlängernde Massnahmen zu geben.

Auch im Sinne der Erfindung ist es, der Batterie physisch ein Erkennungsmerkmal derart einzusetzen, dass ein Ladegerät beim Anschliessen Batterietyp, Batterieladezustand und den Batterieallgemeinzustand erkennt, um die für Batterietyp und Batteriezustand bestgeeignete Ladekennlinie zu wählen. Auch können bestimmte, von einer Überwachungsvorrichtung abgegebene Signale den Ladeprozess beeinflussen, zum Beispiel beenden, verzögern, verstärken oder an den Zustand der Batterie anpassen. Diese Überwachungsvorrichtung ist vorzugsweise in oder an der Batterie selbst platziert. Denkbar ist natürlich auch, dass diese Überwachungsvorrichtung in eine Anzeige und/ oder Bedienungseinheit oder in eine sonstige Steuerung integriert wird.

Weiter ist auch denkbar, dass diese Überwachungs- und Steuerungseinheit direkt ins Ladegerät integriert ist, dieses jedoch in diesem Falle direkt mit der Batterie fest verbunden wird.

Nachfolgend aufgelistet die möglichen, Lebensdauer oder Einsatzdauer erhöhenden Massnahmen:
Der erste zu beachtende Punkt ist eine korrekt auf die Anwendung angepasste Ladekennlinie.
Ein sinnvolles Ladeprogramm kann aus mehreren Phasen bestehen:
   In der ersten Phase wird mit konstantem Strom, vorzugsweise mit dem in der vorherigen Entladung entzogenen Strom geladen bis zum Erreichen der maximalen Spannung von 2.37V pro Zelle (Blei).
   In der nächsten Phase wird bei konstanter Spannung von z.B. 2.37V (pro Zelle) so lange Strom eingeladen, bis weniger als ein bestimmter Wert, z.B. I =C¹/50 gemessen wird. Die Spannung in dieser Phase wird vorzugsweise in Abhängigkeit der Batterie- Temperatur geregelt oder gesteuert.
      ¹ C : Nominelle Kapazität der Batterie nach Herstellerangaben

Nach dieser Zeit wird die Batterie für eine gewisse Zeit, z.B. 1/10 * t1 (t1 = Zeit der Phase 1), in Ruhe gelassen.

In der nächsten Phase wird mit freier Spannung und einem bestimmten Strom, der vorzugsweise demjenigen Strom entspricht, bei dessen Einladung die Batterie chemisch das entstehende Gas noch rekombinieren kann und somit zumindest nur sehr wenig H2 an die Umgebung abgegeben wird.

Dieser Strom, typischerweise ca. 0.6 - 2 % von C, wird für eine bestimmte Zeit, z.B. 10 Min. eingeladen. Nach dieser Zeit erfolgt eine Ruhephase von z.B. 5 Min. Dieser Wechsel wird so lange wiederholt, bis ein stabiler Zustand eingetreten ist. Das heisst, bis die Spannungsdifferenz zwischen der maximalen Spannung des vorletzten Zyklus und der maximalen Spannung des letzten Zyklus kleiner als ein bestimmter Wert ist.

Somit wird die Batterie maximal geladen, ohne den Gasverlust zu forcieren.

Lebensdauererhöhend für die Batterie ist, wenn z.B. jede 10...20 Volladung definiert etwas (z.B. 15%) mit kleinem Strom (z.B. 1/50...1/100 C) überladen wird.

Eine weitere, lebensdauererhöhende Massnahme ist, wenn bei einer Batterie, deren Kapazität unter einen bestimmten Wert gefallen ist, z.B. 80% ihrer Nenn-Kapazität, ein sogenannter Formierungszyklus durchgeführt wird. Dabei wird die Batterie mit kleinem, zumindest annähernd konstantem Entladestrom, z.B. auf ihre volle Entladetiefe (z.B. Schlussspannung von 1,75V pro Zelle) entladen, um danach mit definiertem Strom und freier Spannung, z. B. I = 1/10 C und t = 16h mit bis zu 160% der eigentlichen Kapazität eingeladen wird.

Das Auslösen für diesen sogenannten Formierungs-Zyklus kann entweder eine Unterschreitung einer minimal gemessenen, errechneten oder abgeschätzten Gesamtkapazität sein (z.B. 80% der Nenn-Kapazität bei 5 Std. Entladung), oder eine bestimmte Zahl durchgeführter Voll-Ladungen (z.B. 50), oder wenn ein bestimmtes Zeitintervall, oder wenn ein festgestellter Defekt (zumindest einer der Zellen in den Batterien), oder wenn die Ladezustände / Spannungsniveaus der Zellen innerhalb der Batterie zu stark voneinander abweichen.

Weiter lebensdauerverlängernd ist, wenn der Batterie eine Wechselspannung /pulsierender Gleichstrom oder gleichgerichteter Wechselstrom (z.B. Sinus, OV ... U max wobei I max = max. 1/100C) über lange Zeit, z.B. 14 Tage anliegt.

Insbesondere wird durch diese Massnahme die Oberfläche entpassiviert, was die Kapazität der Batterie erhöht.

Weiter ist lebensdauerfördernd, die Batterie mit sehr kurzen Entladestromspitzen zu beaufschlagen. Diese speziell Methode ist an und für sich bekannt und in der Zeitschrift AMZ 9/2000 publiziert. Dabei wird durch Frequenzen im Bereich 6..8 kHz die Sulfatschicht abgebaut.

Im Sinne der Erfindung ist es, in die Batterie oder deren Umgebung ein Datenerfassungssystem in einem Chip zusammengefasst einzubauen, bestehend aus min. 1 Mikroprozessor, einem nicht flüchtigen Speicher, um sowohl ein Programm als auch einige Messwerte zu erfassen, als auch min. 1 analogen Eingang, ev. min. 1 Ausgang und der Möglichkeit, mit anderen Elementen Daten auszutauschen.

Vorzugsweise wird am Eingang mindestens die gesamte Batteriespannung, ev. aber auch die Spannung der einzelnen Zellen gemessen. Unter Umständen können auch weitere Messwerte wie Gasung, Strom, Temperatur und Zeit erfasst werden. Solche programmierbaren Steuerbausteine sind heute schon allgemein bekannt und kommen in vielen Steuerungs-, Regelungs-, oder Datenerfassungsanwendungen zum Einsatz. Vorzugsweise wird ein solcher Chip direkt in die Batterie eingebaut.

Folgende Messwerte können erfasst werden:
Datum der ersten Entladung (Fabrikation)
Datum der zweiten Entladung (Einsatzbeginn)
Anstelle des Datums ist es natürlich auch möglich, die Anzahl Tage oder Zeiteinheiten bis zum Zeitraum der aktuellen Ablesung zu erfassen.
Anzahl Voll-, und Teilentladungen
Zeitdauer / Datum der Entladungen
Zeitdauer / Datum der Ladung
Eingeladene Kapazität
Abgegebene Kapazität
Zeitdauer einer zu hohen Ladespannung
Gasverlust
Säuredichte des Elektrolyten
Rückschluss auf Gesamtkapazität
Anzahl Teilladungen
Anzahl Volladungen
Anzahl Minuten, bei der die Spannung unter Uₘᵢₙ gewesen ist
Anzahl Entladungen, bei der die Batterie unter einer bestimmten Zeitdauer entladen wurde
Letzte Entladung mit Anzahl der Entladezeit, Anfangsspannung, Schlussspannung.
Differenzspannung der einzelnen Akkuzellen
Durchschnittliche gemessene Entladedauer, durchschnittlicher Entladegrad, daraus kann der durchschnittliche Entladestrom abgeschätzt werden
durchschnittliche Entladestrom
Innenwiderstand
Veränderung des Innenwiderstandes
Säuredichte und dadurch den Ladezustand
Beginn und Ende des Gasungsprozesses in Akku oder Zelle
Betriebstemperatur des Akkus oder jeder Zelle
Anzahl Ladungen mit korrekter Ladekennlinie
Anzahl und /oder Zeitdauer der Ladungen mit nicht geeigneter oder undefinierter Ladekennlinie

Aus verschiedenen dieser Parameter kann auf den Gesundheitszustand des Batteriepakets (SOH = State of Health), der Akkus und sogar der einzelnen Zellen geschlossen werden.

Mittels einem vom Ladegerät abgegebenen und vom Batterieaufzeichnungsgerät erfassten Pulscode kann detektiert werden, ob immer bei der Ladung das dafür geeignete Ladegerät verwendet wird. Das Resultat kann wiederum in der Datenerfassung gespeichert werden. Auf diese Art und Weise können zwischen Batterien und Ladegerät Daten ausgetauscht werden (z.B. eingeladene Kapazität, Information von Lader an Batterie und/oder von der Batterie an den Lader oder an Anzeigegeräte oder an Aktoren und/oder Antriebssteuerungen und oder anderer Geräte).

Genauso kann bei speziellen Ereignissen, z.B. bei einer vorangegangenen Tiefentladung der gesamten Batterie oder einzelner Zellen, vom Chip in der Batterie ein spezieller Code gesendet werden, um beim Ladegerät ein bestimmtes Ladeprogramm zu starten, das sich speziell eignet, die bei der Tiefentladung hervorgerufenen Beschädigungen auszugleichen.

Weiter kann im Chip in der Batterie die Temperatur gemessen werden. Das Resultat, mittels Code wieder an das Ladegerät kommuniziert, kann die Ladekurve beeinflussen oder gar regeln.

Durch einen eingebauten Gasungs-Sensor kann entstehende Gasung erfasst werden, um wiederum die Ladung zu steuern oder zu regeln: z.B. kann der Ladestrom unterbrochen werden, sobald die Gasung über einen bestimmten Grenzwert kommt.

Auch kann festgestellt werden, dass bei auftretender Gasung während der Entladung die Batterie geschädigt ist, und der Anwender aufgefordert wird, diese zu wechseln.

Es können die einzelnen Zellenspannungen gemessen werden, um bei zu hohen Abweichungen
- das Ladegerät speziell zu steuern (z.B. Strom beschränken, gezielte Überladephase, um die Ladezustände der Zellen wieder anzunähern);
- Die schwächste Zelle oder aber mehrere Zellen können mit gezielten Pulsen angeregt werden (z.B. Passivierung entgegenwirken), oder aber es kann bei den stärkeren Zellen durch Parallelschalten eines kleinen Verbrauchers die Ladung an die schwächste Zelle angepasst werden.

Durch den Chip kann beim Entladen periodisch der Innenwiderstand gemessen werden (kurzer Entladepuls, Messen des Spannungsabfalls bei angelegtem Puls), um daraus Rückschlüsse zu ziehen oder aber das Ladegerät zu steuern.

Auch können kurze Strompulse aus oder in die Batterie gesteckt werden, um bei der nachfolgenden Ruhephase die Zeitdauer zu messen, bis die Spannung wieder den dem Ladezustand entsprechenden Wert erreicht hat. Aus dieser Zeitdauer können wieder Rückschlüsse auf Ladezustand und/oder Alterung der Batterie geschlossen werden.

Die gespeicherten Daten können über das Ladegerät oder aber über eine beliebige Schnittstelle an einen PC, an ein Terminal oder an andere Geräte ab- oder ausgegeben werden.

Der Informationsaustausch zwischen Ladegerät und Batterie kann auf die Batteriespannung aufmoduliert werden und über die Batteriepole und Ladekabel an das Ladegerät, respektive dessen Steuerteil oder andere mit der Batterie verbundene Elemente weitergegeben werden. Natürlich ist auch eine separate Datenleitung herkömmlicher Art möglich.

Beispiele der Arbeitsweise der obengenannten Erfindung.
- Der Batterie-Chip erfasst die erste Entladung.
   ⇒ Dadurch wird eindeutig festgestellt, wann die Batterie produziert respektive nach der Fertigung getestet wurde
- Der Batterie-Chip erfasst die zweite Entladung.
   ⇒ Dadurch wird eindeutig festgestellt, wann die Batterie erstmalig in Betrieb genommen wurde.
- Der Batterie-Chip zeichnet auf, wie lange die Batterie bei zu hoher oder zu niedriger Temperatur betrieben wurde. Dies hat Einfluss auf die noch verfügbare Lebensdauer der Batterie (SOH) und die noch zur Verfügung stehende Ladung (SOC).
- Der Batterie-Chip zeichnet Anz. Vollentladungen und Teilentladungen auf (total entladene Kapazität).
   ⇒ Der Kunde, Händler oder Hersteller bekommt Hinweise auf die noch zu verbleibenden nutzbaren Zyklen der Batterie.
- Der Batterie-Chip zeichnet auf, wie häufig der Anwender die Batterie wie tief entladen hat.
   ⇒ Der Kunde, Händler oder Hersteller bekommt Hinweise auf die noch zu verbleibenden nutzbaren Zyklen der Batterie und/oder auf die Behandlung der Batterie.
- Der Batterie-Chip zeichnet auf, wie oft und wie lange die Batteriespannung über resp. unter bestimmten Grenzwerten gewesen ist.
- Es wird aufgezeichnet, wie viele Ladungen beendet wurden (z.B. länger als 6 Min. über 2,4 V / Zelle bei 25°C).
   ⇒ Der Hersteller der Batterie bekommt Hinweise auf mögliche unsachgemässe Behandlung der Batterie, die die Garantieansprüche regeln können.
- Ein vom Ladegerät übermittelter Code wird vom Chip in der Batterie erfasst und ausgewertet.
- Die Anzahl Ladungen mit korrekter Kennlinie und die Anzahl Ladungen mit anderer Kennlinie werden erfasst und ausgewertet.
- Der Batterie-Chip sendet ein Signal, das durch das Ladegerät empfangen wird. Darin enthalten sind:

- Mutmasslicher Ladezustand
- Batterietyp / notwendiges Ladeprogramm
- Letzter, durchschnittlicher Entladestrom
- Temperatur der Batterien
   ⇒ Aus diesen Werten kann das Ladegerät die geeignete Ladekennlinie abrufen oder steuern.
   ⇒ Insbesondere kann das Ladegerät bei einer festgestellten zu tiefen Batterietemperatur diese auch zum Beispiel mit Pulsen erwärmen, um die Energiespeicherfähigkeit zu verbessern.
- Differenzspannungen über einen bestimmten Wert der einzelnen Zellen.
   ⇒ Daraus kann auf die Notwendigkeit von Ladezustandsausgleich zwischen den verschiedenen Zellen geschlossen werden.
   ⇒ Sollten Differenzspannungen vorkommen, so kann das Ladegerät mit definiertem, kleinen Strom so lange laden, bis alle Zellen optimal gefüllt sind. Der Strom ist vorzugsweise derart, dass die vollen Zellen die Energie noch gerade aufnehmen und in Wärme umwandeln können, ohne beschädigt zu werden oder Elektrolyt zu verlieren.
- Differenzspannungen über einen bestimmten Wert bei Anordnungen von Zellen (zwischen Batterieblöcken).
   ⇒ Sollten Differenzspannungen vorkommen, so kann mit einem speziellen Gerät, genannt "Batterieladungsausgleicher", die Ladung von der Batterie mit höherem Energieinhalt oder Spannung zu nehmen und in diejenige mit weniger Energieinhalt oder Spannung zu stecken. Wiederum ist eine Möglichkeit, diese Batterieausgleichsysteme durch die in den Batterien eingebauten Datenchips zu steuern. Eben diese Batterieausgleichsysteme können aber auch dahingehend genutzt werden, durch pulsierende Bearbeitung einer Batterie oder Zelle diese gezielt zu erwärmen. Somit ist es möglich, die Temperaturen in den einzelnen Batterien zu messen und diese durch ein Batterieausgleichsystem zumindest annähernd auf dem selben Niveau zu halten und in einem zweiten, überlagerten Regelkreis die Ladungen der einzelnen Batterien auf dem selben Niveau zu halten.
   ⇒ Dies wiederum bewirkt eine möglichst gleichmässige Entladung der einzelnen Zellen, Batterien oder Blöcke, was die Nutzungsdauer des gesamten Batterieblockes verlängert.

Das neue Verfahren zum Optimieren der Lebensdauer von Blei-Säure Batterien, insbesondere solche für Traktionszwecke, stationäre Batterien, Energiespeicher für Notstromversorgungen oder Starterbatterien, bezieht sich nicht nur auf einzelne Batterien, sondern auch auf die üblichen Batteriepakete. Jeder Batterie wird eine Überwachungsvorrichtung mit einem Datenerfassungssystem zugeordnet, welches eine Vielzahl von Parametern der Batterie in bezug auf die Zeit erfasst und speichert. Beim Ladevorgang werden diese Parameter ausgelesen und zur Steuerung des aktuellen Ladevorgangs und der Wahl der geeigneten Ladekurve in einem Ladegerät verwendet. Diese Parameter umfassen vorzugsweise die Anzahl Voll- und Teilentladungen, die Zeitdauer, Anfangs- und Schlussspannung der letzten Entladung, die Zeit und Dauer der letzten Ladung und der dabei eingeladenen Kapazität und insbesondere die Anzahl der Tiefentladungen, Zeit und Dauer der Entladung, den Durchschnittsstrom und den Ladezustand.

Für die Lebensdauer jedes Akkus und auch jeder einzelnen Zelle ist zudem die Verweilzeit im tiefentladenen Zustand während der letzten Tiefentladung wichtig. Auch die Zeitdauer einer zu hohen Ladespannung, der Verlauf der Gesamtkapazität, die Zeitdauer, bei der die Spannung unter U ₘᵢₙ gewesen ist, letzte Entladung mit Anzahl Teilentladungen, Entladezeit, Anfangsspannung, und Schlussspannung während Status Ladung und Entladung in bezug auf die Zeit werden erfasst und gespeichert. Dies gilt im optimalen Falle für jede einzelne Zelle jedes Akkus.

Ebenso wichtig sind Informationen über das bei jeder Ladung jeweils verwendete Ladegerät. Auch dies soll beim jeweiligen Ladevorgang erfasst und gespeichert werden. So ist jederzeit feststellbar, wie oft ein geeignetes Ladegerät benützt wurde, was sich direkt auf die noch zur verfügende Nutzungsdauer der Batterie auswirken kann.

Dazu wird das Batteriepaket mit mindestens einer Batterie mit einer Überwachungsvorrichtung versehen. Diese besteht aus einem Datenerfassungssystem, welches Messfühler und/oder Sensoren zum Erfassen der Messwerte, einen Prozessor zum Verarbeiten der Messwerte, einen Timer zum Zuordnen der Messwerte mittels Zeitstempel, einen Datenspeicher und eine Kommunikationsleitung zur Kommunikation des Datenerfassungssystems mit einem Ladegerät oder sonstigen Komponenten.

Optimal ist, wenn jeder Batterie im Batteriepaket ein eigenes Datenerfassungssystem zugeordnet ist. Dieses kann am oder sogar im Batteriegehäuse angeordnet werden. In der verbesserten Variante werden die Messfühler und/oder Sensoren wenn möglich für jede Zelle des Akkus angeordnet, so dass die Messwerte jeder einzelnen Zelle im Datenerfassungssystem erfasst werden.

Eine weitere Verbesserung besteht im Verfahren, die verschiedenen Batterien im Batteriepaket auf die gleiche Betriebstemperatur zu bringen. Auch die Betriebstemperatur während dem Ladevorgang hat einen erheblichen Einfluss auf die Qualität des Ladevorgangs und damit auf die tatsächlich mögliche nutzbare Kapazität des Akkus. Das Verfahren bestehen darin, dass kurzfristig ein Akku im Batteriepaket oder einzelne Zellen in der Batterie mittels Wechselstrom oder pulsierendem Gleichstrom beaufschlagt werden. Dadurch wird die jeweilige Zelle etwas aufgeheizt, bis alle Zellen die gleiche Temperatur aufweisen.

Als Kommunikationsleitung zur Datenübertragung zwischen Datenerfassungssystem und dem Ladegerät, respektive dessen Steuerung, Batteriemanagementsystem oder anderen Geräten, kann jede bekannte digitale Schnittstelle verwendet werden. Um zusätzliche Kabel zu vermeiden, können als Kommunikationspfad die Gleichstrom-Polleitungen des Akkus oder des Batteriepakets benützt werden. Die digitalen Signale werden auf den Ladestrom aufmoduliert.

Eine Kapazitätsausgleichsvorrichtung ermöglicht, die Zellen und/oder Batterien in bezug auf ihre Kapazitäten untereinander auszugleichen. Dies wird durch den Chip über eine interne oder externe Beschaltung gesteuert. Die Kapazitätsausgleichsvorrichtung bewerkstelligt den Ausgleich mittels Formierungsentladungen der Zellen oder Batterien oder Batterieblocks.

In einem übergeordneten Batterie- oder Antriebsmanagement können die Betriebs- und Alarmzustände aus dem Innern der Komponenten visuell auf einer Anzeigeeinheit dargestellt werden. Dazu übermittelt der Chip die Daten über eine Kommunikationsleitung.

Die Auswertung erlaubt, aus den erfassten Messwerten und dem Ladezustand, die in der Vergangenheit umgeschlagene Kapazität, die der Batterie zugekommene Behandlung und die daraus resultierende noch nutzbare Restlebensdauer geschlossen werden kann.

Die erfassten Messwerte werden durch geeignete Algorithmen ausgewertet, so dass aus den errechneten Werten auf Lade- oder Algemeinzustand geschlossen werden kann. Dadurch können der Ladevorgang und/oder sonstige Prozesse ausgelöst oder gesteuert werden.

## Patentansprüche

1. Verfahren zum Optimieren der Lebensdauer von Blei-Säure Batterien, insbesondere solche für Traktionszwecke, Notstromversorgungen, Pufferbatterien oder Starterbatterien von Motoren, **dadurch gekennzeichnet, dass** in einem Batteriepaket, mit mindestens einer Batterie zugeordneten Überwachungsvorrichtung mit einem Datenerfassungssystem, welches eine Vielzahl von Parametern der Batterien in bezug auf die Zeit erfasst und speichert, wobei beim Ladevorgang diese Parameter ausgelesen und zur Steuerung des aktuellen Ladevorganges und der Wahl der Ladekurve in einem Ladegerät verwendet werden. Dabei umfassen diese Parameter mindestens die Anzahl Voll- und Teilentladungen, die Zeitdauer der letzten Entladung, die Zeit der letzten Ladung und der dabei eingeladenen Kapazität, die Anzahl der Tiefentladungen.

2. Verfahren nach Anspruch 1, **dadurch gekennzeichnet, dass** zudem die Verweilzeit im tiefentladenen Zustand währen der letzten Tiefentladung, die Zeitdauer einer zu hohen Ladespannung, der Verlauf der Gesamtkapazität, die Zeitdauer, bei der die Spannung unter U ₘᵢₙ gewesen ist, letzte Entladung mit Anzahl Teilentladungen, Entladezeit, Anfangsspannung, und Schlussspannung in bezug auf die Zeit, erfasst und gespeichert werden.

3. Verfahren nach Anspruch 1, **dadurch gekennzeichnet, dass** die Spannungen der einzelnen Akkuzellen des Akkus erfasst und gespeichert werden.

4. Verfahren nach Anspruch 1, **dadurch gekennzeichnet, dass** Informationen über das bei jeder Ladung jeweils verwendete Ladegerät beim jeweiligen Ladevorgang erfasst und gespeichert werden.

5. Vorrichtung zum Durchführen des Verfahrens nach Anspruch 1, **dadurch gekennzeichnet, dass** dem Batteriepaket mit mindestens einer Batterie eine Überwachungsvorrichtung mit einem Datenerfassungssystem zugeordnet ist, welches Messfühler und/oder Sensoren zum Erfassen der Messwerte, einen Prozessor zum Verarbeiten der Messwerte, einen Timer zum Korrelieren der Messwerte mit der Zeit, einen Datenspeicher und eine Kommunikationsleitung zur Kommunikation des Datenerfassungssystems mit einem Ladegerät/Batteriemanagementsystem oder sonstigem Gerät umfasst.

6. Vorrichtung nach Anspruch 5, **dadurch gekennzeichnet, dass** jeder Batterie im Batteriepaket ein eigenes Datenerfassungssystem zugeordnet ist.

7. Vorrichtung nach Anspruch 6, **dadurch gekennzeichnet, dass** das Datenerfassungssystem an/in der Batterie angebracht ist.

8. Vorrichtung nach Anspruch 6, **dadurch gekennzeichnet, dass** Mittel vorhanden sind, um die verschiedenen Batterien im Batteriepaket auf die gleiche Betriebstemperatur zu bringen.

9. Vorrichtung nach Anspruch 5, **dadurch gekennzeichnet, dass** als Kommunikationsleitung zwischen dem Datenerfassungssystem und dem Ladegerät/Batteriemanagementsystem oder sonstigen Geräten, die Gleichstrom-Polleitungen sind.

10. Vorrichtung nach einem der Ansprüche 5 bis 9, **dadurch gekennzeichnet, dass** die Messfühler und/oder Sensoren in jeder Zelle jedes Akkus oder an jeder Batterie oder in/an jedem Batterieblock angeordnet sind und die Messwerte jeder einzelnen Zelle oder an jeder Batterie oder jedes einzelnen Blocks im Datenerfassungssystem erfasst werden.

11. Vorrichtung nach Anspruch 5, **dadurch gekennzeichnet, dass** eine Kapazitätsausgleichsvorrichtung für die Zellen und/oder Batterien vorhanden ist, welche durch den Chip über eine interne oder externe Beschaltung steuerbar sind.

12. Vorrichtung nach Anspruch 11, **dadurch gekennzeichnet, dass** die Kapazitätsausgleichsvorrichtung durch eine Formierungsentladung der Zellen oder Batterien oder Batterieblocks auslösbar ist.

13. Vorrichtung nach Anspruch 5, **dadurch gekennzeichnet, dass** ein übergeordnetes Batterie-, oder Antriebsmanagement vorhanden ist, welches mit einer visuellen Anzeigeeinheit zum Anzeigen von Betriebs- und Alarmzustände der Batterien und/oder einer separaten Steuereinheit versehen ist, welche mit dem Chip über eine Kommunikationsleitung verbunden ist.

14. Vorrichtung nach einem der vorhergehenden Ansprüche, **dadurch gekennzeichnet, dass** die eine Auswerteeinheit zur Auswertung der erfassten Messwerte vorhanden ist, um aus dem Ladezustand, die in der Vergangenheit umgeschlagene Kapazität, die der Batterie zugekommene Behandlung und die daraus resultierende noch nutzbare Restlebensdauer festzustellen.

15. Vorrichtung nach einem der vorangehenden Ansprüche, **dadurch gekennzeichnet, dass** die erfassten Messwerte durch geeignete Algorithmen ausgewertet werden und mit den errechneten Werten auf Lade- oder Allgemeinzustand (SOH oder SOC) geschlossen werden kann und/oder Lade- und/oder sonstige Prozesse auslösbar oder steuerbar sind.
